# FASCICULE DE BREVET EUROPEEN

(11) **EP 2 678 224 B1**
(45) Date de publication et mention de la délivrance du brevet: **06.05.2015**
(21) Numéro de dépôt: 12709923.2
(22) Date de dépôt: 17.02.2012
(51) Int. Cl.: B64D 13/00

(54) **ECHANGEUR THERMIQUE INCORPORE DANS UNE PAROI D'UN AERONEF**
IN EINER WAND EINES FLUGZEUGS EINGEBAUTER WÄRMETAUSCHER
HEAT EXCHANGER BUILT INTO A WALL OF AN AIRCRAFT

(30) Priorité: 22.02.2011 FR 1151429
(43) Date de publication de la demande: 01.01.2014
(73) Titulaire: Airbus Operations SAS, 31060 Toulouse (FR)
(72) Inventeur: GUERING, Bernard, 31850 Montrabe (FR); DURAND, Yves, 31840 Aussonne (FR)
(74) Mandataire: Fantin, Laurent
(86) Numéro de dépôt international: PCT/FR2012/050340
(87) Numéro de publication internationale: WO 2012/114022

(56) Documents cités:
- WO-A1-2009/146843
- WO-A1-2010/012684
- US-A- 4 819 720
- US-A- 5 112 010

## Description

La présente invention se rapporte à un échangeur thermique incorporé dans une paroi d'un aéronef.

De manière connue, le fuselage d'un aéronef comprend une structure assurant principalement la fonction de reprise des efforts sur laquelle est rapportée une enveloppe conférant à l'aéronef ses propriétés aérodynamiques. Ainsi, en vol, des écoulements d'air s'écoulent au niveau de la face extérieure du fuselage.

La structure comprend des poutres, des cadres, des lisses, des raidisseurs ou autres, assemblés entre eux. Ces éléments peuvent être métalliques et/ou en matériau composite. En parallèle, l'enveloppe se présente sous la forme d'une juxtaposition de panneaux ou tronçons complets de tôles métalliques reliés à la structure par rivetage ou tous moyens appropriés. En variante, ces panneaux peuvent être en matériau composite.

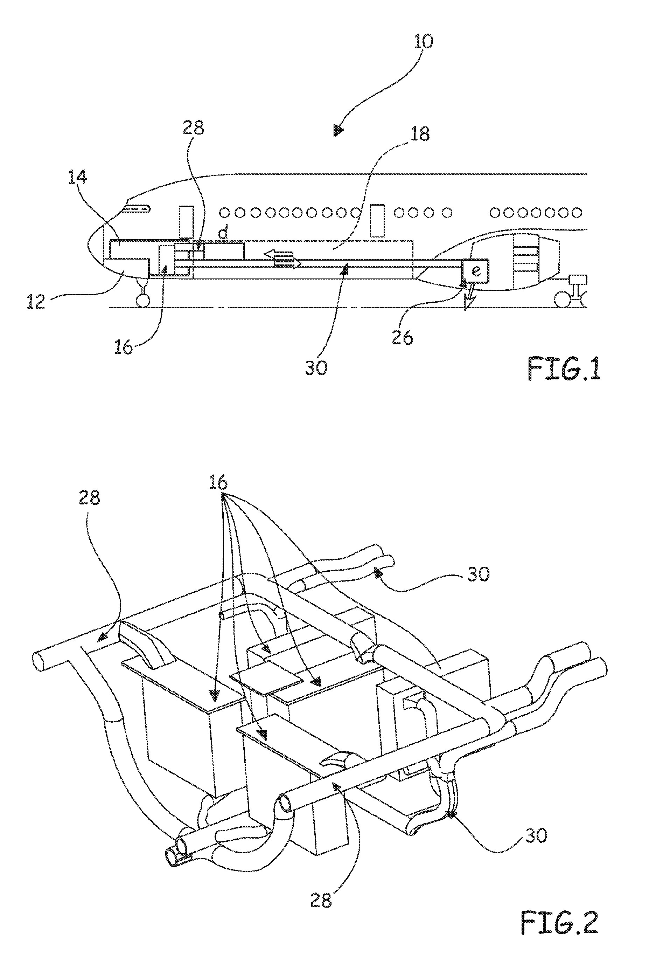

Sur les figures 1 et 2, on a représenté en 10 un aéronef et différentes zones comme une case de train avant 12 dans laquelle est susceptible d'être logé le train d'atterrissage avant 12 en vol, une soute avant technique 14 dans laquelle sont disposés des équipements et des systèmes électriques 16 suivie d'une soute dite cargo 18. La case de train avant 12 et la soute technique 14 sont disposées au niveau de la pointe avant de l'aéronef sous la cabine de pilotage. Dans le cas d'un avion destiné au transport de passagers, la soute cargo 18 est disposée sous la cabine des passagers.

Certaines zones de l'aéronef sont isolées thermiquement de l'extérieur du fuselage et pressurisées comme par exemple les soutes 14 et 18, la cabine de pilotage ou la cabine des passagers alors que d'autres ne le sont pas comme par exemple la case de train avant 12. Ainsi, la température de l'air présent à l'intérieur de la case de train peut descendre à - 50°C en vol et être à une température proche de la température de l'air présent à l'extérieur du fuselage. L'air présent dans ladite case de train peut être soumis à des écoulements avec des vitesses nettement inférieures à celles de l'air présent à l'extérieur du fuselage.

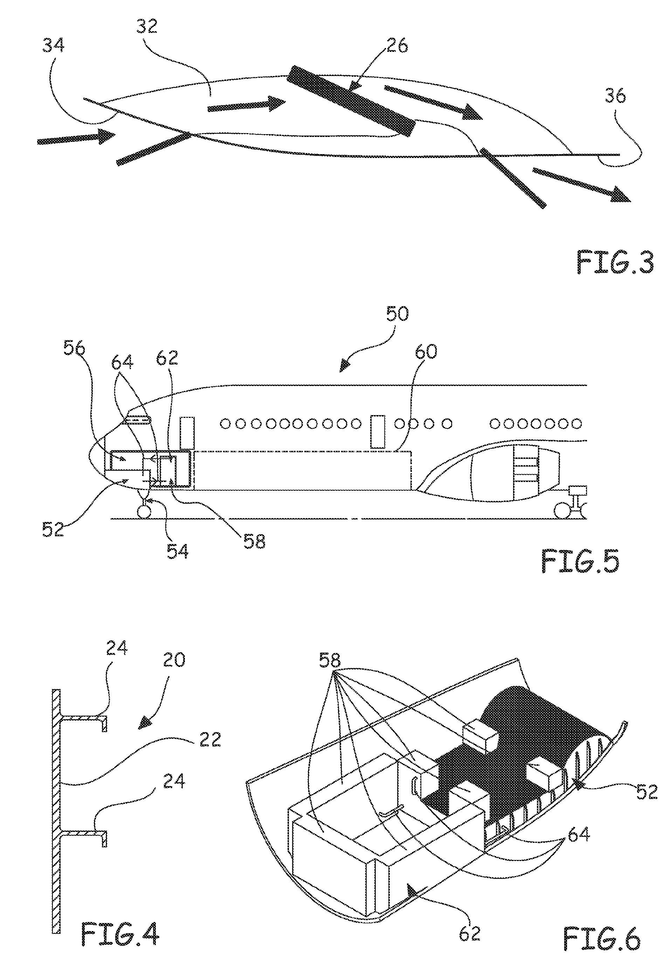

La case de train avant 12 fait partie de la structure de l'aéronef. Elle comprend deux parois latérales 20 dont une est représentée en coupe sur la figure 4, un fond reliant les bords supérieurs des parois latérales et une paroi avant et une paroi arrière reliant respectivement les bords avants et les bords arrières des parois latérales. Les cadres de la structure de l'aéronef disposés au niveau de la case de train avant ne s'étendent pas sur toute la périphérie du fuselage et comprennent une découpe pour permettre le passage du train d'atterrissage. Ainsi, ces cadres sont reliés aux bords inférieurs des parois latérales 20 de la case de train. Pour assurer la reprise des efforts, les parois de la case de train avant 12 comprennent de nombreux renforts au niveau de leurs faces. Ainsi, comme illustré sur la figure 4, la face externe 22 des parois latérales 20 comprend des raidisseurs 24 orientés selon une direction sensiblement perpendiculaire aux plans des cadres.

Selon un autre aspect, l'aéronef comprend de nombreux éléments comme par exemple des équipements et systèmes électriques 16 présents dans la soute avant technique 14 qui produisent de la chaleur et qu'il est nécessaire de refroidir.

Comme illustré de manière schématique sur la figure 1, dans le cas des équipements et systèmes électriques 16, de l'air prélevé dans la soute cargo 18 est insufflé dans les équipements et systèmes électriques 16. Cet air qui en les traversant se réchauffe est aspiré pour être acheminé jusqu'à un ou plusieurs échangeur(s) 26. Selon un mode de réalisation, un réseau de conduits 28 pour l'air frais est prévu entre la soute cargo 18 et les équipements et systèmes électriques 16 et un réseau de conduits 30 pour l'air réchauffé est prévu entre les équipements et systèmes électriques 16 et l'échangeur 26.

Comme illustré sur la figure 3, les échangeurs 26 sont disposés dans un ou des conduit(s) 32 dans le(s)quel(s) s'écoule de l'air qui est prélevé à l'extérieur du fuselage via au moins une entrée d'air 34 et qui est rejeté à l'extérieur du fuselage via au moins une sortie d'air 36.

Le fait de capter l'air via l'entrée 34 et de le rejet via la sortie 36 engendre des perturbations sur le plan aérodynamique qui augmentent la traînée de l'aéronef et sa consommation énergétique. Par conséquent, il est nécessaire de minimiser ces perturbations.

Or, les besoins de refroidissement dans un aéronef tendent à augmenter sensiblement. Cette augmentation des besoins de refroidissement induit plusieurs inconvénients, à savoir l'augmentation des perturbations aérodynamiques du fait de l'augmentation des débits d'air prélevé et rejeté, l'augmentation de la masse embarquée en raison de l'augmentation du nombre et/ou des dimensions des conduits 28, 30 et 32 et des échangeurs 26.

Pour limiter les perturbations aérodynamiques, les formes et/ou les dimensions des entrées 34 et des sorties 36 sont optimisées. A titre d'exemple, le document FR-2.915.7333 décrit une grille de sortie mobile.

Afin de limiter ces perturbations, d'autres solutions ont été développées pour transférer la chaleur dans les réservoirs de carburant ou dans la motorisation en utilisant le carburant comme fluide caloporteur. A titre d'exemple, le document FR-2.936.224 décrit un système permettant les réjections thermiques au niveau de la motorisation. Toutefois, les réservoirs ou les motorisations ont des capacités d'absorption de la chaleur limitées qui ne sont pas suffisantes et inférieures aux besoins de l'aéronef.

En complément ou de manière alternative, d'autres documents décrivent l'utilisation du fuselage pour dissiper la chaleur. A cet effet, des conduits sont disposés à proximité de la surface intérieure du fuselage (voir par exemple les documents US 5,112,010 et US 4,819,720) pour assurer le transfert thermique du fluide caloporteur circulant dans les conduits vers la peau du fuselage puis de la peau du fuselage vers l'environnement extérieur de l'aéronef. Cette solution n'est pas pleinement satisfaisante car l'efficacité du transfert thermique du fluide caloporteur vers l'environnement extérieur de l'aéronef dépend de l'efficacité d'un premier transfert thermique entre le fluide caloporteur et la peau du fuselage et d'un second transfert thermique entre la peau du fuselage et l'environnement extérieur.

La paroi du conduit véhiculant le fluide caloporteur n'étant pas directement en contact avec l'environnement extérieur, le transfert thermique n'est pas optimal et dépend essentiellement de la surface de contact entre les parois des conduits et la peau du fuselage. De plus, ce transfert thermique est également impacté par les vitesses importantes des écoulements d'air à l'extérieur du fuselage de l'aéronef qui peuvent provoquer des échauffements importants en raison du frottement de l'air sur le fuselage.

D'autres documents décrivent l'intégration d'un échangeur thermique dans la peau de l'avion (voir par exemple WO 2009/146843 et WO 2010/012684).

La présente invention propose une alternative ou un complément aux dispositifs de transfert thermique vers l'extérieur de l'aéronef de l'art antérieur.

A cet effet, l'invention a pour objet un aéronef comprenant au moins une paroi délimitant une première zone de l'aéronef isolée thermiquement de l'extérieur de l'aéronef et une seconde zone contenue dans l'aéronef non isolée thermiquement par rapport à l'extérieur de l'aéronef et un échangeur thermique dans lequel circule un fluide caloporteur, caractérisé en ce que ladite paroi comprend au moins un conduit dans lequel circule le fluide caloporteur de manière à assurer la fonction d'échangeur thermique.

D'autres caractéristiques et avantages ressortiront de la description qui va suivre de l'invention, description donnée à titre d'exemple uniquement, en regard des dessins annexés sur lesquels :
- la figure 1 est une vue latérale de l'avant d'un aéronef illustrant de manière schématique un dispositif de refroidissement selon l'art antérieur,
- la figure 2 est une vue en perspective illustrant des éléments présents dans une soute avant technique selon l'art antérieur,
- la figure 3 est un schéma illustrant un dispositif de dissipation thermique selon l'art antérieur,
- la figure 4 est une coupe d'une paroi latérale d'une case de train selon l'art antérieur,
- la figure 5 est une vue latérale de l'avant d'un aéronef illustrant de manière schématique un dispositif de refroidissement selon l'invention,
- la figure 6 est une vue en perspective illustrant un agencement optimisé d'éléments présents dans une soute avant technique selon l'invention,
- la figure 7 est une vue en perspective d'une case de train selon un premier point de vue situé à l'extérieur de l'aéronef,
- la figure 8 est une vue en perspective d'une case de train selon un autre point de vue situé à l'intérieur de l'aéronef,
- la figure 9 est une coupe d'une paroi d'une case de train selon l'invention,
- la figure 10 est une vue latérale d'une paroi d'une case de train selon l'invention illustrant un circuit prévu pour un fluide caloporteur,
- la figure 11 est une coupe illustrant un détail du circuit de la figure 10,
- la figure 12A est une coupe illustrant une autre variante du circuit prévu pour un fluide caloporteur intégré dans une paroi d'une case de train, et
- la figure 12B est une coupe illustrant une autre variante du circuit prévu pour un fluide caloporteur intégré dans une paroi d'une case de train.

Sur la figure 5, on a représenté l'avant d'un aéronef 50 comportant une case de train 52 apte à contenir un train d'atterrissage 54, une soute technique 56 dans laquelle sont disposés des meubles 58 contenant des équipements électriques et une soute cargo 60 séparée par une cloison de la soute technique 56.

Certaines zones de l'aéronef sont isolées thermiquement de l'extérieur du fuselage et pressurisées comme par exemple les soutes 56 et 60, la cabine de pilotage ou la cabine des passagers alors que d'autres ne le sont pas comme par exemple la case de train avant 52. Ainsi, la température de l'air présent à l'intérieur de la case de train peut descendre à - 50°C en vol et être à une température proche de la température de l'air présent à l'extérieur du fuselage. De plus, l'air présent dans ladite case de train est soumis à des écoulements avec des vitesses nettement inférieures à celles de l'air présent à l'extérieur du fuselage et n'engendre pas d'échauffement au niveau des parois de la case de train.

Pour la suite de la description, on entend par meuble toute forme de contenant, comme par exemple une armoire, un coffre, un boitier, apte à contenir des équipements notamment électriques.

De préférence, les meubles 58 sont disposés dans la soute technique en couronne de manière à dégager un volume unique central. Cette solution permet d'offrir un accès privilégié aux faces avant des meubles 58 et une meilleure ségrégation des équipements critiques (l'équipement principal et l'équipement redondant étant diamétralement opposés). Cet agencement permet également de prévoir des compartiments sous le plancher dégagé en partie centrale dans lesquels peuvent être disposés des équipements électriques.

Enfin, selon un autre avantage, en dehors des phases de maintenance, l'espace central dégagé peut être utilisé à d'autres fins, comme par exemple en tant que pièce aménagée pour l'équipage.

Selon un autre aspect, un équipement électrique constitue une source chaude 62 qu'il est nécessaire de refroidir ou de maintenir dans une plage de températures. Pour la suite de la description, on entend par source de chaleur 62 tous dispositifs (par exemple un échangeur) ou tout fluide (par exemple l'air de la cabine des passagers) qui doit être refroidi ou maintenu dans une plage de températures donnée grâce à un dispositif de refroidissement.

De manière connue, un dispositif de refroidissement comprend au moins un premier échangeur assurant le transfert thermique entre la source de chaleur 62 et un fluide caloporteur et au moins un second échangeur thermique assurant le transfert thermique entre le fluide caloporteur et l'air présent à l'extérieur de l'aéronef ou dans une zone de l'aéronef non isolée thermiquement par rapport à l'extérieur, généralement non pressurisée.

Pour assurer le transfert du fluide caloporteur du premier échangeur vers le second échangeur, le dispositif comprend un réseau de conduits 64.

Selon un mode de réalisation privilégié, le fluide caloporteur est un liquide. Ce choix de fluide caloporteur permet de réduire la section de passage des conduits 64 ce qui tend à diminuer la masse embarquée.

Le réseau de conduits 64, le premier échangeur ne sont pas plus décrits car ils sont connus de l'homme du métier. Ainsi, le réseau de conduits est conçu en fonction notamment de l'implantation des sources de chaleur à refroidir. En parallèle, le premier échangeur est adapté en fonction de la source de chaleur et du fluide caloporteur. A titre d'exemple, il peut se présenter sous la forme d'un serpentin.

Selon une caractéristique de l'invention, la fonction de second échangeur est assurée par au moins une paroi formant une cloison entre une zone I de l'aéronef isolée thermiquement de l'extérieur et une zone E contenue dans l'aéronef non isolée thermiquement par rapport à l'extérieur de l'aéronef. A cet effet, la paroi comprend au moins un conduit dans lequel circule le fluide caloporteur.

Cette paroi délimite généralement une zone pressurisée d'une zone non pressurisé. Par conséquent, elle possède des caractéristiques mécaniques lui permettant de résister avec éventuellement une faible déformation à la différence de pression d'une face à l'autre.

De préférence, le second échangeur comprend un conduit dans lequel circule le fluide caloporteur délimité par une paroi dont une face est en contact avec le fluide caloporteur et dont l'autre face est en contact avec l'air présent dans la zone non isolée thermiquement.

Cette solution permet d'optimiser le transfert thermique dans la mesure où une seule paroi sépare le fluide caloporteur et l'air présent dans la zone non isolée. Ainsi, il est possible que la distance séparant le fluide caloporteur et l'air soit inférieure à 20 mm, voire inférieure à 3 mm.

Selon un autre avantage, cette paroi ne constitue pas une surface aérodynamique si bien qu'il est possible que le ou les conduits soient en saillie par rapport à la face de la paroi en contact avec l'air présent dans la zone E non isolée thermiquement afin d'augmenter la surface d'échange entre le fluide caloporteur et l'air.

Selon un autre avantage, contrairement à l'air situé à l'extérieur de l'aéronef, l'air présent à l'intérieur de l'aéronef dans une zone non isolée n'est pas soumis à des écoulements avec des vitesses élevés et ne provoque aucun échauffement au niveau de la surface d'écoulement.

Avantageusement, chaque conduit est délimité en partie par au moins une nervure prévue pour renforcer la résistance mécanique de la paroi. Ainsi, une même pièce telle qu'une nervure permet d'assurer deux fonctions à savoir une fonction de résistance structurale et une fonction thermique.

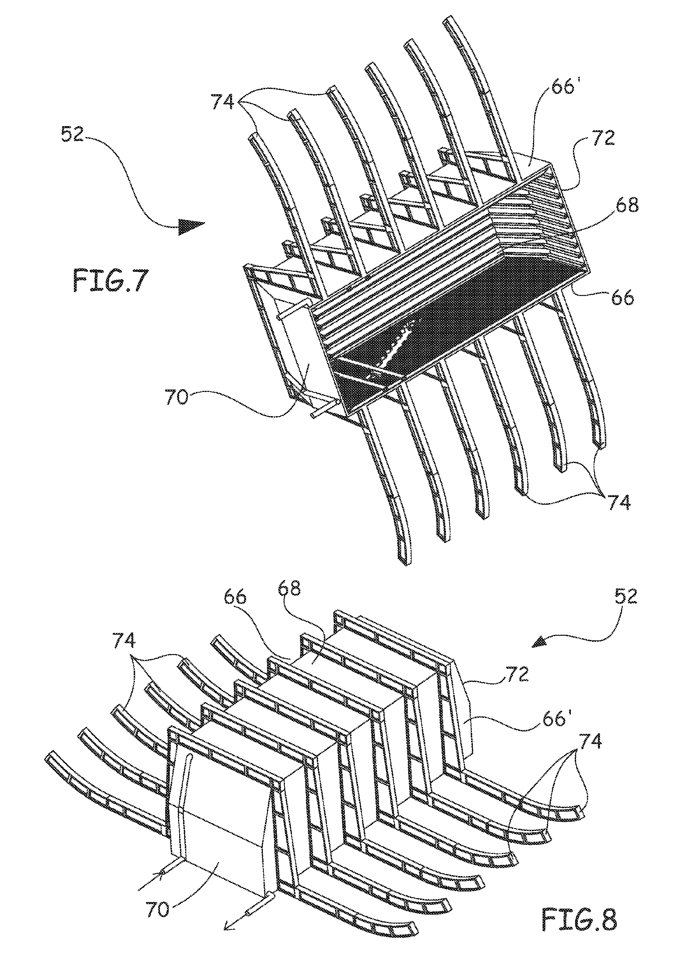

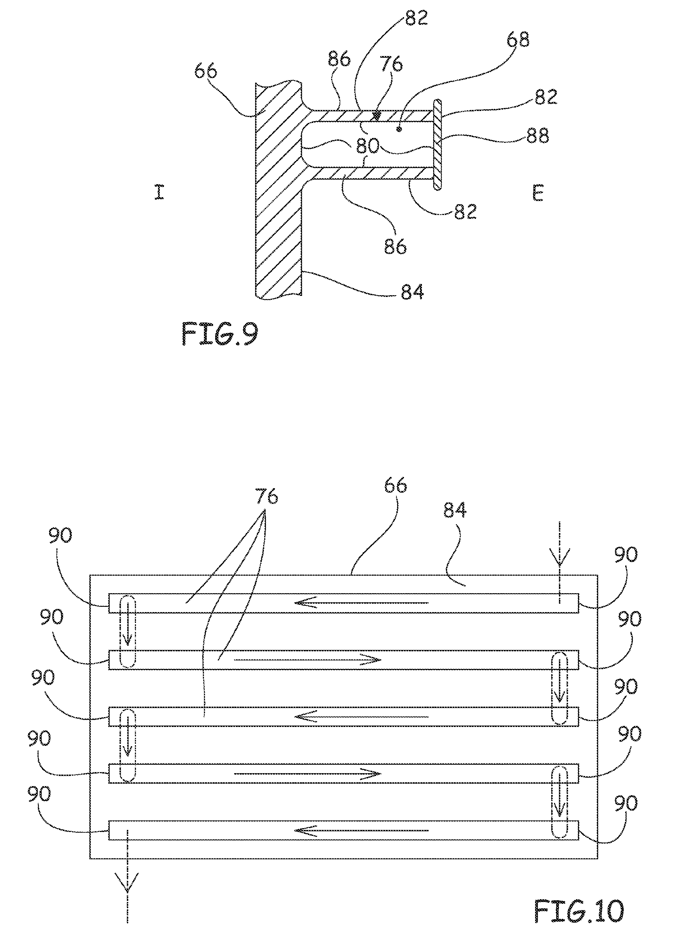

Selon un mode de réalisation illustré sur les figures 7 à 9, la case de train avant 52 comprend deux parois latérales 66, 66' dont une est représentée en coupe sur la figure 9, les bords supérieurs des parois latérales 66, 66' étant reliés par une paroi formant un fond 68 et les bords avant et arrière étant reliés respectivement par une paroi avant 70 et une paroi arrière 72. Les bords inférieurs des parois latérales 66, 66' de la case de train sont reliés à des cadres 74 (dont seulement une partie est représentée) formant une partie de la structure de l'aéronef.

Avantageusement, au moins une paroi de la case de train 52 assure la fonction de second échangeur et comprend au moins un conduit 76 dans lequel circule un fluide caloporteur 78 comprenant une face 80 en contact avec le fluide caloporteur 78 et une autre face 82 en contact avec l'air présent dans une zone non isolée à savoir le logement délimité par la case de train dans lequel est disposé le train d'atterrissage.

Cette solution permet également de réduire les contraintes de fatigue dues aux effets de dilatation car les écarts de température entre les phases au sol et en vol sont moins importants. Elle permet également d'obtenir un dégivrage automatique de certains éléments intégrés dans la case de train comme par exemple des paliers d'articulation.

De préférence, au moins l'une des parois latérales 66, 66' est utilisée comme échangeur thermique.

Pour la suite de la description, seule l'une des parois latérales 66 est décrite. Bien entendu ce mode de réalisation peut être dupliqué au niveau de l'autre paroi latérale 66' et/ou aux autres parois de la case de train.

Selon un mode de réalisation, la paroi 66 comprend au niveau de sa face externe 84 des nervures 86. Les nervures 86 sont agencées par paire, les nervures 86 d'une même paire étant séparées d'une faible distance de l'ordre de quelques centimètres nettement inférieure à la distance séparant deux nervures de paires différentes, les nervures 86 d'une même paire formant les parois d'un conduit prévu pour le fluide caloporteur. Ainsi, contrairement aux nervures de l'art antérieur qui n'avaient qu'une fonction de renfort, les nervures 86 ont une fonction de renfort et de délimitation d'un conduit.

Pour fermer le conduit, la paroi latérale 66 comprend pour chaque paire de nervures 86 un chapeau 88 qui relie les extrémités des deux nervures 86 de manière à délimiter un conduit 76 avec lesdites nervures 86 et la paroi latérale. Selon un mode de réalisation, la paroi latérale est monobloc et réalisée par usinage de préférence à grande vitesse compte tenu de la faible épaisseur des nervures 86. Les chapeaux 88 peuvent être solidarisés aux nervures par soudage par friction.

Selon un autre avantage, la structure creuse formée par une paire de nervures et un chapeau offre une meilleure résistance mécanique qu'une nervure isolée si bien qu'il est possible de réduire la hauteur des nervures ou d'en réduire le nombre.

Comme illustré sur la figure 10, la paroi latérale 66 comprend plusieurs conduits 76 parallèles entre eux et parallèles au bord inférieur de ladite paroi. Chaque conduit 76 est obturé à ses extrémités par des cloisons transversales 90 reliant les deux nervures délimitant le conduit 76.

Les conduits 76 sont reliés par des raccords en U 92. Les conduits 76 sont reliés de manière à former un serpentin comme illustré sur la figure 10.

Ces raccords en U 92 sont prévus au niveau de la face interne de la paroi latérale 66.

Selon un mode de réalisation, un raccord en U se présente sous la forme d'un tube cintré de faible épaisseur.

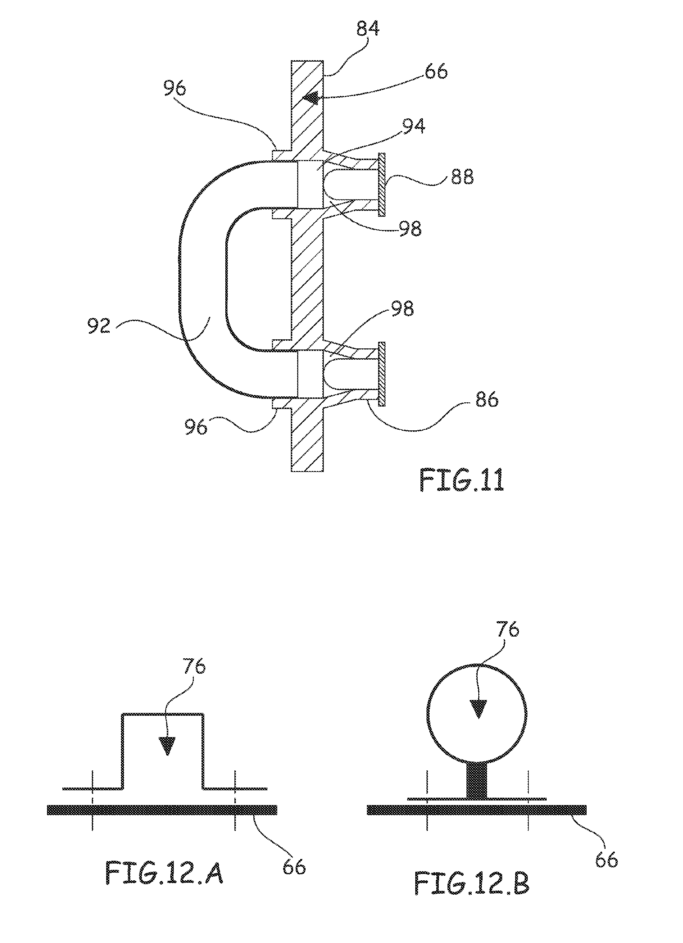

Comme illustré sur la figure 11, la paroi latérale 66 comprend pour chaque extrémité des raccords en U un trou traversant 94 avec à une extrémité un manchon 96 dans lequel peut s'emboiter l'extrémité du raccord en U. A l'opposé, les nervures 86 ont une forme courbe de manière à délimiter une zone de forme conique 98 en sifflet (le diamètre étant plus important au niveau de la paroi 66 qu'au niveau des extrémités des nervures) au droit de chaque trou traversant 94 pour limiter les pertes de charge locale. Des joints d'étanchéité peuvent être prévus pour assurer l'étanchéité entre les raccords en U et la paroi latérale. L'invention n'est pas limitée à cette forme de raccord. Ainsi, les raccords en U pourraient être intégrés dans la paroi latérale et obtenus par usinage comme les nervures 86.

Une même paroi latérale peut comprendre une ou plusieurs zones, chaque zone comprenant des conduits 76 parallèles entre eux et reliés entre eux par des raccords en U. Les différentes zones peuvent être reliées par des moyens de connexion sous forme de conduits prévus au niveau de la face interne de la paroi latérale.

Selon un autre aspect, une même case de train peut comprendre plusieurs parois intégrant des conduits 76. Selon les cas, ces conduits peuvent être reliés entre eux de manière à former un unique circuit ou certains peuvent être séparés d'autres de manière à créer plusieurs circuits distincts.

L'implantation des conduits 76 se fera en fonction notamment des singularités présentes sur la paroi et des efforts mécaniques repris par ladite paroi.

Selon un autre point, l'invention n'est pas limitée à ce mode de réalisation des conduits. A titre d'exemple, d'autres alternatives illustrées sur les figures 12A et 12B peuvent être envisagées pour former des conduits au niveau de la face externe d'une paroi. Ainsi, sur la figure 12A, un conduit peut être délimité par un raidisseur avec une section en Oméga rapporté et fixé par tous moyens appropriés sur la face externe de la paroi. Sur la figure 12B, le conduit se présente sous la forme d'un tube relié à l'extrémité d'un profilé avec une section en T dont la tête est plaquée et fixée par tous moyens appropriés sur la face externe d'une paroi.

## Revendications

1. Aéronef comprenant au moins une paroi (66) délimitant une première zone (I) de l'aéronef isolée thermiquement de l'extérieur de l'aéronef et une seconde zone (E) contenue dans l'aéronef non isolée thermiquement par rapport à l'extérieur de l'aéronef et un échangeur thermique dans lequel circule un fluide caloporteur, **caractérisé en ce que** ladite paroi (66) comprend au moins un conduit (76) dans lequel circule le fluide caloporteur de manière à assurer la fonction d'échangeur thermique.

2. Aéronef selon la revendication 1, **caractérisé en ce que** le conduit (76) est délimité par au moins une nervure (86) renforçant la résistance mécanique de la paroi (66).

3. Aéronef selon la revendication 1 ou 2, **caractérisé en ce que** le conduit (76) dans lequel circule le fluide caloporteur est délimité par une paroi dont une face est en contact avec le fluide caloporteur et dont l'autre face est en contact avec l'air présent dans la seconde (E) zone non isolée thermiquement.

4. Aéronef selon l'une quelconque des revendications 1 à 3, **caractérisé en ce que** le conduit (76) est en saillie par rapport à la face de la paroi (66) en contact avec la seconde zone (E) non isolée thermiquement afin d'augmenter la surface d'échange entre le fluide caloporteur et l'air.

5. Aéronef selon l'une quelconque des revendications précédentes, **caractérisé en ce que** la paroi (66) est une paroi ou une partie d'une paroi délimitant une case de train (52).

6. Aéronef selon la revendication 5, **caractérisé en ce que** la paroi (66) délimitant la case de train (52) comprend au niveau de sa face externe (84) des nervures (86) agencées par paire, un chapeau (88) pour chaque paire reliant les extrémités des nervures (86) de manière à délimiter avec les nervures (86) et la paroi (66) un conduit (76).

7. Aéronef selon la revendication 6, **caractérisé en ce que** les nervures (86) sont parallèles au bord inférieur de la paroi (66).

8. Aéronef selon la revendication 6 ou 7, **caractérisé en ce que** chaque conduit (76) est obturé à ses extrémités par des cloisons transversales (90) reliant les deux nervures (86) délimitant le conduit (76), les conduits (76) étant reliés entre eux par des raccords (92) de manière à former un circuit.

9. Aéronef selon la revendication 8, **caractérisé en ce que** les raccords (92) sont prévus au niveau de la face interne de la paroi (66).

10. Aéronef selon la revendication 9, **caractérisé en ce que** la paroi (66) comprend pour chaque extrémité des raccords un trou traversant (94), les nervures (86) ayant une forme courbe de manière à délimiter une zone de forme conique (98) au droit de chaque trou traversant (94) pour limiter les pertes de charge locale.

11. Aéronef selon l'une quelconque des revendications précédentes, **caractérisé en ce que** le fluide caloporteur est un liquide.

## Patentansprüche

1. Luftfahrzeug mit wenigstens einer Wand (66) die eine gegen den Außenraum des Luftfahrzeugs thermisch isolierte erste Zone (I) des Luftfahrzeugs begrenzt, und mit einer im Luftfahrzeug enthaltenen, bezüglich des Außenraums des Luftfahrzeugs nicht thermisch isolierten zweiten Zone (E) und mit einem Wärmetauscher, in dem ein Wärmetransportfluid zirkuliert, **dadurch gekennzeichnet, dass** die Wand (66) wenigstens eine Leitung (76) aufweist, in der das Wärmetransportfluid auf eine Weise zirkuliert, die die Funktion des Wärmetauschers gewährleistet.

2. Luftfahrzeug nach Anspruch 1, **dadurch gekennzeichnet, dass** die Leitung (76) durch wenigstens eine Verstärkungsrippe (86) begrenzt ist, die die mechanische Festigkeit der Wand (66) erhöht.

3. Luftfahrzeug nach Anspruch 1 oder 2, **dadurch gekennzeichnet, dass** die Leitung (76), in der das Wärmetransportfluid zirkuliert, durch eine Wand begrenzt ist, von der eine Seite in Kontakt mit dem Wärmetransportfluid steht und von der die andere Seite in Kontakt mit der in der thermisch nicht isolierten zweiten Zone (E) vorhandenen Luft steht.

4. Luftfahrzeug nach einem der Ansprüche 1 bis 3, **dadurch gekennzeichnet, dass** die Leitung (76) bezüglich der Seite der Wand (66), die in Kontakt mit der thermisch nicht isolierten zweiten Zone (E) steht, vorspringt, um die Austauschfläche zwischen dem Wärmetransportfluid und der Luft zu vergrößern.

5. Luftfahrzeug nach einem der vorhergehenden Ansprüche, **dadurch gekennzeichnet, dass** die Wand (66) eine Wand oder ein Wandabschnitt ist, der einen Fahrgestellkasten (52) begrenzt.

6. Luftfahrzeug nach Anspruch 5, **dadurch gekennzeichnet, dass** die Wand (66), die den Fahrgestellkasten (52) begrenzt, im Bereich ihrer Außenseite (84) paarweise ausgebildete Verstärkungsrippen (86) aufweist, wobei eine Abdeckung (88) für jedes Paar die Enden der Verstärkungsrippen (86) derart verbindet, dass sie mit den Verstärkungsrippen (86) und der Wand (66) eine Leitung (76) begrenzt.

7. Luftfahrzeug nach Anspruch 6, **dadurch gekennzeichnet, dass** die Verstärkerrippen (86) parallel zum unteren Rand der Wand (66) verlaufen.

8. Luftfahrzeug nach Anspruch 6 oder 7, **dadurch gekennzeichnet, dass** jede Leitung (76) an ihren Enden durch quer verlaufende Abschlüsse (90) verschlossen ist, die die beiden die Leitung (76) begrenzenden Verstärkungsrippen (86) verbinden, wobei die Leitungen (76) untereinander durch Verbindungsstücke (92) verbunden sind, um einen Kreislauf zu bilden.

9. Luftfahrzeug nach Anspruch 8, **dadurch gekennzeichnet, dass** die Verbindungsstücke (92) im Bereich der Innenseite der Wand (66) vorgesehen sind.

10. Luftfahrzeug nach Anspruch 9, **dadurch gekennzeichnet, dass** die Wand (66) an jedem Ende der Verbindungsstücke eine Durchführung (94) aufweist, wobei die Verstärkungsrippen (86) derart gekrümmt geformt sind, dass diese eine konisch geformte Zone (98) im Bereich jeder Durchführung (94) begrenzen, um den lokalen Druckabfall zu begrenzen.

11. Luftfahrzeug nach einem der vorhergehenden Ansprüche, **dadurch gekennzeichnet, dass** das Wärmetransportfluid eine Flüssigkeit ist.

## Claims

1. An aircraft comprising at least one wall (66) delimiting a first zone (I) of the aircraft which is thermally insulated from the outside of the aircraft and a second zone (E) contained within the aircraft which is not thermally insulated with respect to the outside of the aircraft and a heat exchanger inside which a heat transfer fluid circulates, **characterized in that** said wall (66) comprises at least one duct (76) inside which the heat transfer fluid circulates so as to act as a heat exchanger.

2. The aircraft as claimed in claim 1, **characterized in that** the duct (76) is delimited by at least one rib (86) which increases the mechanical strength of the wall (66).

3. The aircraft as claimed in claim 1 or 2, **characterized in that** the duct (76) inside which the heat transfer fluid circulates is delimited by a wall, one face of which is in contact with the heat transfer fluid and the other face of which is in contact with the air present in the second zone (E) which is not thermally insulated.

4. The aircraft as claimed in any one of claims 1 to 3, **characterized in that** the duct (76) projects from the face of the wall (66) in contact with the second zone (E) which is not thermally insulated in order to increase the surface area for heat exchange between the heat transfer fluid and the air.

5. The aircraft as claimed in any one of the preceding claims, **characterized in that** the wall (66) is a wall or a part of a wall delimiting a landing gear bay (52).

6. The aircraft as claimed in claim 5, **characterized in that** the wall (66) delimiting the landing gear bay (52) comprises, on its outer face (84), ribs (86) arranged in pairs, with a cap (88) for each pair linking the ends of the ribs (86) so as to delimit, with the ribs (86) and the wall (66), a duct (76).

7. The aircraft as claimed in claim 6, **characterized in that** the ribs (86) are parallel to the lower edge of the wall (66).

8. The aircraft as claimed in claim 6 or 7, **characterized in that** the ends of each duct (76) are blocked off by transverse partitions (90) linking the two ribs (86) which delimit the duct (76), the ducts (76) being connected to each other by connectors (92) so as to form a circuit.

9. The aircraft as claimed in claim 8, **characterized in that** the connectors (92) are provided on the inner face of the wall (66).

10. The aircraft as claimed in claim 9, **characterized in that** the wall (66) comprises, for each end of the connectors, a through hole (94), the ribs (86) being curved so as to delimit a conical zone (98) in line with each through hole (94) in order to limit localized pressure losses.

11. The aircraft as claimed in any one of the preceding claims, **characterized in that** the heat transfer fluid is a liquid.
